# DEMANDE DE BREVET EUROPEEN

(11) **EP 2 287 544 A1**
(43) Date de publication de la demande: **23.02.2011**
(21) Numéro de dépôt: 07380267.0
(22) Date de dépôt: 03.10.2007
(51) Int. Cl.: F24J 2/52, F24J 2/54

(54) **Structure support de panneaux dans les milieux aquatiques**

(71) Demandeur: Energias Renovables del Principado, S.A., 33002 Oviedo (ES)
(72) Inventeur: Norniella Carreno, D. Manuel Angel, 33002 Ovieda (Cantabria) (ES)
(74) Mandataire: Manzano Cantos, Gregorio

(57) **Abrégé**

STRUCTURE DE SUPPORT DE PANNEAUX SUR DES MOYENS AQUATIQUES pour la disposition de panneaux solaires photovoltaïques dans laquelle ladite structure est intégrée par des bassins ou des plate-formes flottants modulaires ancrés à un terrain ferme et entrelacés et combinés entre eux par des moyens mécaniques d'union pour former une matrice et sur lesquels sont ancrés une série de panneaux photovoltaïques au moyen d'une structure portante fixe ou articulée, ordonnés sur le bassin sans interférence d'ombres et avec de couloirs praticables entre eux et dans l'ensemble supportés par des flotteurs situés sur la partie inférieure, fixés à des éléments d'ancrage qui adaptent la forme du flotteur au bassin ou plate-forme flottant (1) et qui ont la faculté d'éviter l'évaporation du lit aquatique où ils flottent.

## Description

La présente invention, consiste en une nouvelle structure de support de panneaux, panneaux photovoltaïques, permettant la possibilité de les situer sur des moyens aquatiques (bassins d'irrigation, lacs de barrage, réservoirs, ou espaces tranquilles de la mer), cette invention a été conçue et mise en oeuvre afin d'obtenir la possibilité de mettre en place des panneaux solaires dans des zones où, avec la technologie existante, c'était impossible, outre l'obtention d'une grande quantité d'amélioration dans la zone implantée.

Une description approximative de l'invention est la suivante: il s'agit d'une structure constituée par une plate-forme sur laquelle seront ancrés une série de panneaux photovoltaïques, fixes, mobiles ou articulés au moyen d'une structure de support, ces panneaux avec la plate-forme et les flotteurs permettant de la maintenir à flot sur la surface sont appelés bassin flottant ou plate-forme flottante, de manière qu'en ancrant divers bassins formant une matrice, cela permette de couvrir la zone aquatique sur laquelle est implantée ladite invention.

Comme il a été susmentionné cela apportera une amélioration dans la zone implantée car s'il s'agissait d'un étang ou réservoir d'irrigation (zone pour laquelle on est en train d'étudier le projet), on réussit à éviter une dépense d'eau par évaporation car en couvrant la surface avec les plaques solaires, le rayonnement solaire ne frappe pas directement sur l'eau en permettant que 100% de cette eau, soit destinée à sa finalité, irriguer les champs.

Outre ce qui a été susmentionné, elle présente l'avantage du fait qu'il ne sera pas nécessaire l'implantation d'aucun type d'installation pour la connexion au secteur car dans ces étangs ou réservoirs il existe déjà des installations de pompage avec leur installation électrique qui sera utilisée à cette fin.

### ANTECEDENTS DE L'INVENTION

Il n'existe pas d'antécédent direct de l'objet de l'invention car l'énergie photovoltaïque tout au long de l'histoire a toujours été liée à des installations terrestres.

Actuellement, on connaît de nombreux dispositifs et moyens pour pouvoir installer des panneaux photovoltaïques sur différents types de surfaces, comme le sont : toitures de bâtiments ou bien des plaines de terrains. Dans ce sens, on peut citer, les fermes photovoltaïques dans des plaines de terrain ancrées sur celui-ci au moyen de différents procédés, comme pourrait l'être celui de semelles filantes, ou bien des fermes photovoltaïques sur des toitures des halles ou bâtiments en réalisant des ancrages sur la propre structure du bâtiment.

Aujourd'hui, l'énergie solaire photovoltaïque est le nouvel investissement pour le futur, garantie par la loi. Les installations solaires photovoltaïques connectés au secteur ont l'objectif de produire de l'énergie électrique pour l'injecter dans le secteur et la vendre aux compagnies électriques. Cela fait que l'investissement soit rapidement amorti en obtenant des bénéfices important dans un court délai. Ces projets et leurs revenus sont garantis par le décret de loi: ES436/2004 qui oblige les compagnies électriques à acheter toute l'énergie produite par lesdites installations.

L'énergie solaire photovoltaïque vendue au secteur est aujourd'hui une affaire à coût minimal et à peine sans risque car la plupart des entités bancaires offrent des financements globaux pour ce type d'affaires et initiatives. Cela sans compter sur les différentes aides et subventions offertes aussi bien par le gouvernement central que par les gouvernements autonomiques.

Les systèmes actuels présentent alors l'inconvénient de n'être seulement valables que pour être installés sur des moyens terrestres, par contre, avec cette nouvelle interprétation avec un haut degré d'innovation et d'utilité, on établit la possibilité d'employer une structure capable de soutenir des panneaux solaires sur des moyens aquatiques (lacs, lacs de barrage, ou réservoirs d'irrigation ou d'autres), avec les avantages conséquents que cela présente.

À titre de référence à l'Etat de la Technique nous citerons le brevet PCT 2007000051 « UN SYSTÈME DYNAMIQUE DE SUIVI SOLAIRE » de ER Automatización, S.A.

### DESCRIPTION DE L'INVENTION

Le dispositif de l'invention présente une structure sur la base de laquelle on obtient la possibilité d'installer des panneaux sur des surfaces aquatiques

Il est constitué par un bassin ou plate-forme flottante, une partie d'une structure modulaire raccordable et/ou combinable; chaque bassin supportera la charge des panneaux de manière que ceux-ci soient ancrés à la plate-forme au moyen d'une structure support qui pourrait être de différents types, fixe, articulé, mobile selon la position du panneau et le type de celui-ci. Le bassin aura l'espace suffisant pour le panneau et la zone vide dédiée à l'ombre de celui-ci en ayant pour but qu'un panneau n'interfère pas le rendement de celui situé immédiatement derrière

Un autre détail de l'invention est que la zone d'ombre pourra être transitée pour le passage du personnel pour réaliser des tâches de maintenance.

Une autre caractéristique de l'invention est que le bassin sera soutenu sur le moyen aquatique à travers des flotteurs qui seront situés sur la partie inférieure de celui-ci, ceux-ci se trouveront fixés à des éléments d'ancrage qui adapteront la forme du flotteur à celle du bassin pour ainsi conférer une plus grande rigidité à la structure. Toute la structure sera ancrée au terrain de manière à pouvoir supporter les conditions adverses pouvant avoir lieux dans la zone.

Pour compléter la description qui va être réalisée à la suite et afin d'aider à une meilleure compréhension des caractéristiques de l'invention, le présent mémoire descriptif est accompagné d'un jeu de dessins, et grâce aux figures de ceux-ci on comprendra mieux les innovations et avantages du dispositif objet de l'invention.

### BREVE DESCRIPTION DES DESSINS

Figure 1: on montre une vue en perspective filaire du bassin en séparant ses éléments les plus significatifs.
Figure 2: Elle montre une vue en élévation du bassin portant.
Figure 3: Vue en plan de la structure où on peut voir une possible disposition des panneaux sur la plate-forme.
Figure 3A: Vue en perspective isométrique d'une autre possible disposition du panneau sur la plate-forme.
Figure 3B: Vue postérieure de la représentation de la figure 3A.
Figure 4: Vue en perspective où l'on observe la manière dont serait complétée la matrice.
Figure 5: Pièce d'accouplement employée pour unir les différents bassins ou plate-formes.
Figure 6: Vue en perspective centrée sur l'élément support des panneaux photovoltaïques.

### DESCRIPTION D'UN MODE DE MISE EN OEUVRE PREFEREE

En référence aux dites illustrations, on décrit tout d'abord l'union bassin (1) flotteur (3), celle-ci est réalisée avec une platine sous forme de « U » (4) avec deux oreilles ayant une perforation pour l'accouplement de goupille (non référencés), tandis que le flotteur (3) passera à travers le "U" (4) et au moyen des deux oreilles on le vissera à la plate-forme (1) en réussissant à fixer le flotteur (3) à celle-ci.

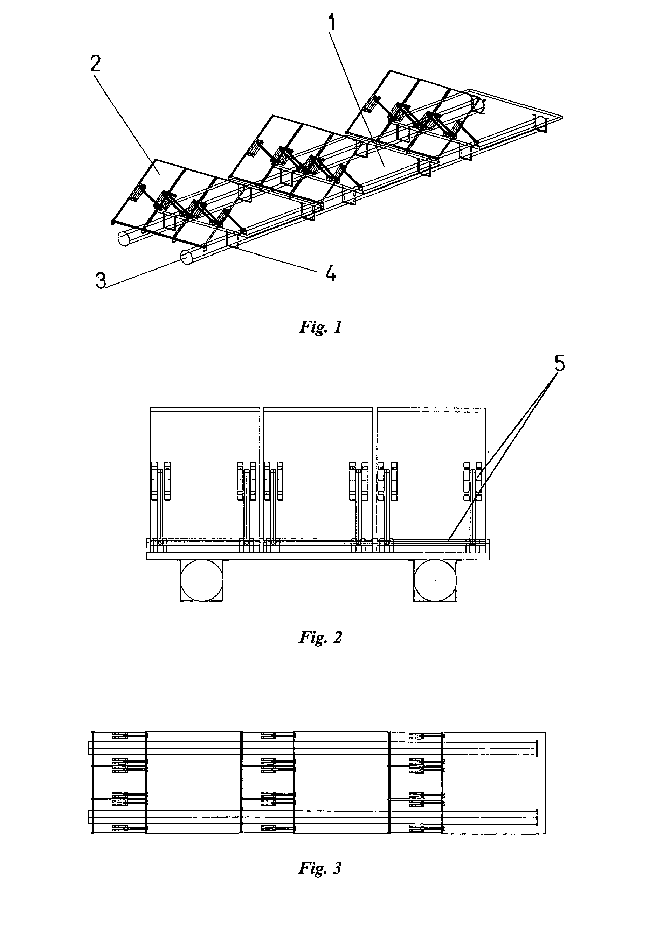

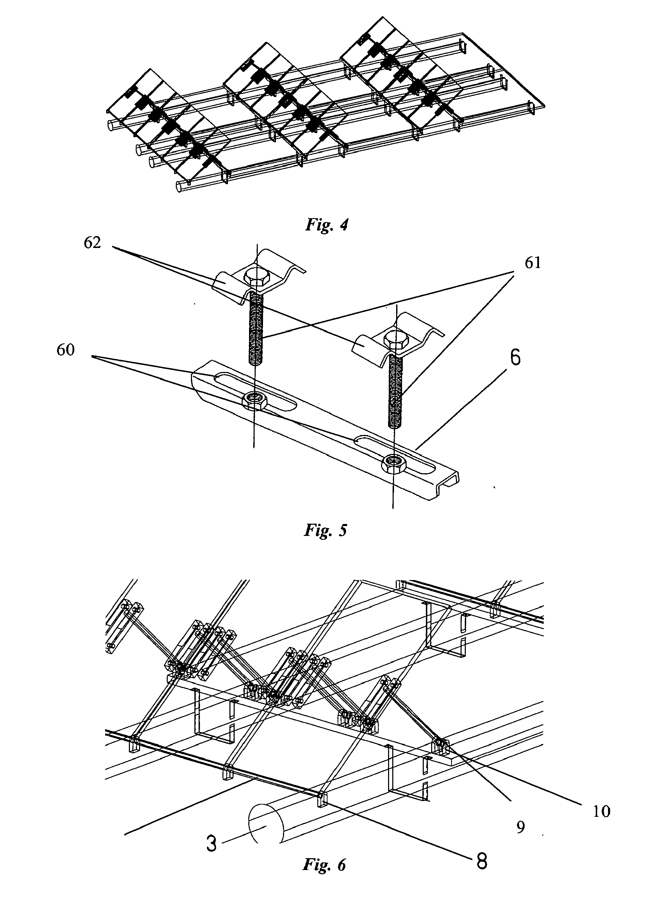

Les panneaux photovoltaïques (2) seront accouplés à la plate-forme au moyen d'une structure formée par une barre longitudinale (7) (Fig.5) sur sa partie inférieure qui sera soudée au panneau solaire (2) en le pourvoyant de la possibilité de rotation, cette barre sera adaptée à la plate-forme (1) au moyen de deux pièces (8) mises en place à ses extrémités, elles seront pourvues d'un trou où sera accouplée la barre (7) et soudées par leur partie inférieure à la plate-forme (1) avec une structure portante (5) située entre ladite barre (7) et le panneau (1) pour les inclinaisons orientées de celui-ci (Fig.2). La partie postérieure du module (2) portera deux rails, un à chaque extrémité, où seront accouplés deux leviers (9) qui pourront glisser vers le haut et vers le bas à travers ces rails, la partie inférieure de ces leviers sera fixée à la plate-forme avec une pièce d'articulation (10) permettant la rotation de haut en bas pour pouvoir faire glisser les leviers à travers les rails.

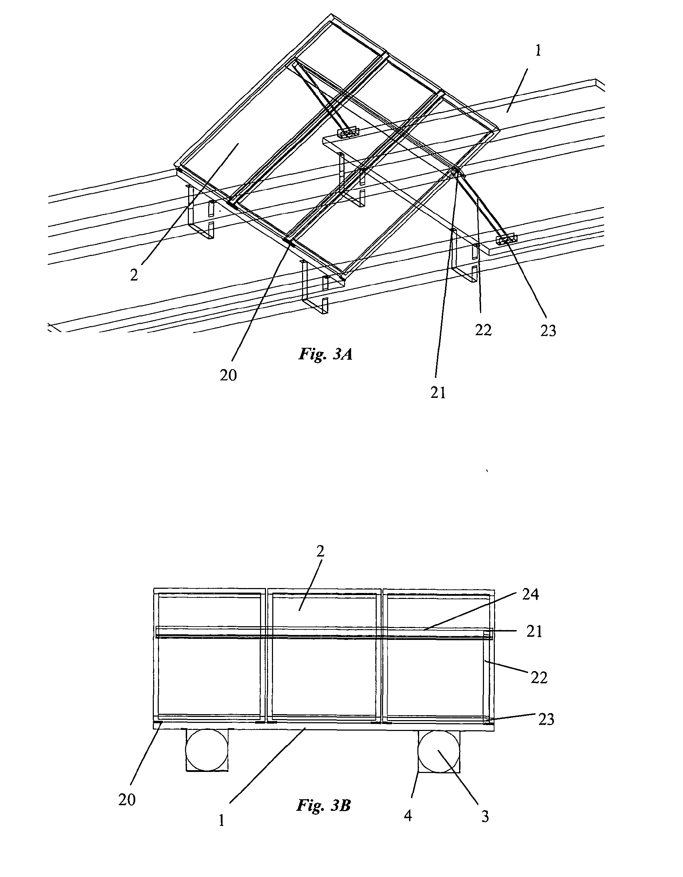

Dans une autre version, les panneaux photovoltaïques, peuvent être fixes ou articulés. Dans cette dernière option représentée dans les figures 3A et 3B la structure autoportante est composée de barres extensibles (21), une pour chaque extrémité du bâti des panneaux (2) armé ave un profil longitudinal (25), avec des pivots d'articulation (24) sur la plate-forme (1) et une bride d'appui (21) glissante, guidée sur les bords (20) dudit bâti. Sur le bord inférieur du bâti des panneaux (2) on prévoit des moyens de charnière (22) pour s'articuler sur la plate-forme (1).

Pour former la structure de l'ensemble, on peut unir les bassins ou plate-formes flottants (1) entre eux. L'union est réalisée au moyen de la pièce (6) consistant en une languette avec deux trous oblongs (60) où sont accouplées les vis (61) avec une rondelle (62) sous forme de plaque qui est adaptée sur la surface plate des plate-formes (1).

Selon la mise en oeuvre préférée de l'invention la structure portante des modules photovoltaïques (2) est constituée par cinq éléments (1), (2), (3), (4), (5) qui, accouplés entre eux, forment l'unité dite bassin ou plate-forme flottant.

Tout d'abord on établit l'union de l'élément 1 (bassin) avec les flotteurs (3), cette union est réalisée au moyen de la pièce (4) ou analogue, en fonction de la forme du flotteur, celle-ci sera accouplée à la pièce (1) (vissée, soudée), de manière à attraper le flotteur (3) entre les deux, ce procédé sera répété avec plusieurs pièces de serrage (en fonction du nombre de flotteurs et de la longueur du bassin) pour obtenir une union consistante.

Le pas suivant sera l'union des modules photovoltaïques à la plate-forme (1), cette union sera réalisée au moyen d'une structure portante (5) qui sera fixée à la plaque (2), la structure portante (5) ainsi que ses fixations pourra être différente selon le type, le nombre de panneaux et la disposition de ceux-ci. Le type d'union entre la structure (5) et la plate-forme support pourra être; vissée, soudée ou toute autre, en fonction du type des matériaux employés pour sa construction.

Après avoir montée un bassin ou plate-forme flottant (1) on doit procéder à l'union de plusieurs de ceux-ci entre eux, pour cela on emploie les languettes ou agrafes d'union (6) ou analogues car cela dépendra du type des plaques employées.

Une fois convenablement décrite la nature de l'invention on indique aux effets opportuns, etc.

## Revendications

1. STRUCTURE DE SUPPORT DE PANNEAUX SUR DES MOYENS AQUATIQUES pour la disposition de panneaux solaires photovoltaïques dans laquelle ladite structure est **CARACTÉRISÉE en ce qu**'elle est intégrée par des bassins ou des plate-formes flottants (1) modulaires ancrés à un terrain ferme et entrelacés et combinés entre eux par des moyens mécaniques d'union (6) pour former une matrice et sur lesquels sont ancrés une série de panneaux photovoltaïques (2) au moyen d'une structure portante (5) ou une autre fixe articulée, ordonnés sur le bassin sans interférence d'ombres et avec de couloirs praticables entre eux et dans l'ensemble supportés par des flotteurs (3) situés sur la partie inférieure, fixés à des éléments d'ancrage (4) qui adaptent la forme du flotteur au bassin ou plate-forme flottant (1).

2. STRUCTURE DE SUPPORT DE PANNEAUX SUR DES MOYENS AQUATIQUES selon la revendication 1, l'union des flotteurs avec le bassin ou plate-forme flottant est **CARACTÉRISÉE en ce qu**'elle est faite au moyen d'une platine sous forme de « U » (4) avec deux oreilles ayant une perforation pour accouplement de goupille, le flotteur (3) passe à travers le « U » (4) et au moyen des deux oreilles il sera vissé au bassin (1) pour fixer le flotteur (3).

3. STRUCTURE DE SUPPORT DE PANNEAUX SUR DES MOYENS AQUATIQUES selon la revendication 1, les moyens d'union entre les bassins sont **CARACTÉRISÉS en ce qu**'il s'agit d'une languette ou agrafe (6) avec deux trous oblongs (60) où sont accouplées des vis (61) avec une rondelle (62) ayant la forme d'une plaque qui s'adapte à la surface plate des bassins ou plate-formes flottants (1).

4. STRUCTURE DE SUPPORT DE PANNEAUX SUR DES MOYENS AQUATIQUES selon la revendication 1, le soutien des panneaux photovoltaïques est **CARACTÉRISÉ en ce qu**'il comprend une barre longitudinale (7), sur sa partie inférieure, qui sera soudée audit panneau (2) avec possibilité de rotation et adaptée au bassin ou plate-forme flottant (1) au moyen de deux pièces (8) pivotantes, situées à ses extrémités.

5. STRUCTURE DE SUPPORT DE PANNEAUX SUR DES MOYENS AQUATIQUES selon la revendication 4, dans laquelle le panneau photovoltaïque est **CARACTÉRISÉ en ce que** dans sa partie postérieure il porte deux rails, un à chaque extrémité, où sont accouplés deux leviers (9) qui, peuvent glisser vers le haut et vers le bas dans lesdits rails, leur partie inférieure sera fixée à la plate-forme ou bassin (1) avec une pièce d'articulation (10) permettant la rotation de haut en bas pour pouvoir faire glisser les leviers (9) à travers les rails.

6. STRUCTURE DE SUPPORT DE PANNEAUX SUR DES MOYENS AQUATIQUES selon les revendications 4 et 5, dans une autre version le panneau photovoltaïque est également **CARACTÉRISÉ en ce que** la structure autoportante est composée de barres extensibles (21), une pour chaque extrémité du bâti des panneaux (2) armé ave un profil longitudinal (25), avec des pivots d'articulation (24) sur la plate-forme (1) et une bride d'appui (21) glissante, guidée sur les bords (20) dudit bâti et sur le bord inférieur du bâti des panneaux (2) on prévoit des moyens de charnière (22) pour s'articuler sur la plate-forme (1).

7. STRUCTURE DE SUPPORT DE PANNEAUX SUR DES MOYENS AQUATIQUES selon la revendication 1, la structure portante des panneaux photovoltaïques est **CARACTÉRISÉE en qu**'elle est constituée par une structure portante (5) située entre ladite barre (7) et le panneau (1) pour les inclinaisons orientées de celui-ci.
